# EUROPEAN PATENT APPLICATION

(11) **EP 4 620 836 A1**
(43) Date of publication of application: **24.09.2025**
(21) Application number: 22970043.0
(22) Date of filing: 27.12.2022
(51) Int. Cl.: B64U 10/14, B64D 27/24, B64D 45/00, B64U 50/19

(54) **UNMANNED AERIAL VEHICLE AND STOP SYSTEM**

(71) Applicant: Kubota Corporation, Osaka 556-8601 (JP)
(72) Inventor: SEINO, Kohei, Sakai-shi, Osaka 590-0908 (JP)
(74) Representative: Cabinet Beau de Loménie
(86) International application number: PCT/JP2022/048192
(87) International publication number: WO 2024/142249

(57) **Abstract**

An unmanned aerial vehicle includes: a plurality of electric motors, each configured to rotate a respective one of a plurality of rotors; a plurality of motor drive circuits, each configured to drive a respective one of the plurality of electric motors; and a controller configured to control operation of the plurality of motor drive circuits. The controller is configured to change the operation of the plurality of motor drive circuits from a flight state of the unmanned aerial vehicle to a state where flight is not possible in response to a stop signal.

## Description

### TECHNICAL FIELD

The present disclosure relates to unmanned aerial vehicles and termination systems.

### BACKGROUND ART

An unmanned aerial vehicle (UAV) is an aircraft that structurally cannot accommodate human occupants and is capable of flight through remote control or autonomous operation. A rotary-wing type unmanned aerial vehicle is a UAV that generates lift using propellers, namely rotary wings, which rotate around an axis. A small unmanned aerial vehicle equipped with multiple rotary wings (MultiRotor UAV) is also called a "drone", "multirotor", or "multicopter", and is widely used for applications including aerial photography, surveying, logistics, and agricultural spraying.

Patent Document 1 describes a fault diagnosis circuit for diagnosing open-sticking or closed-sticking of relays used in PLCs (Programmable Logic Controllers).

### CITATION LIST

### PATENT LITERATURE

Patent Document No. 1: Japanese Patent Application Publication No. 2020-134157

### SUMMARY OF INVENTION

### TECHNICAL PROBLEM

Unmanned aerial vehicles may be equipped with relay circuits for emergency stopping of rotor rotation. Technical improvements for fault diagnosis of the relay circuits are desired.

The present disclosure provides termination systems each capable of terminating the flight of an unmanned aerial vehicle, and unmanned aerial vehicles equipped with such termination systems.

### SOLUTION TO PROBLEM

In an exemplary and non-limiting embodiment, the unmanned aerial vehicle of the present disclosure comprises a plurality of rotors; a plurality of electric motors, each configured to rotate a respective one of the plurality of rotors; a plurality of motor drive circuits, each configured to drive a respective one of the plurality of electric motors; and a controller configured to control operation of the plurality of motor drive circuits, wherein the controller is configured to change the operation of the plurality of motor drive circuits from a flight state of the unmanned aerial vehicle to a state where flight is not possible in response to a stop signal.

In an exemplary and non-limiting embodiment, the termination system of the present disclosure is used in an unmanned aerial vehicle comprising a plurality of rotors, a plurality of electric motors each configured to rotate a respective one of the plurality of rotors, a plurality of motor drive circuits each configured to drive a respective one of the plurality of electric motors, and a controller configured to control operation of each of the plurality of motor drive circuits. The termination system is configured to output a stop signal to the controller to change the operation of the plurality of motor drive circuits from a flight state of the unmanned aerial vehicle to a state where flight is not possible.

### ADVANTAGEOUS EFFECTS OF INVENTION

According to embodiments of the present disclosure, termination systems each capable of terminating the flight of an unmanned aerial vehicle, and unmanned aerial vehicles equipped with such termination systems are provided.

### BRIEF DESCRIPTION OF DRAWINGS

FIG. **1A** is a block diagram schematically showing several examples of rotation drive devices to rotate rotors in an unmanned aerial vehicle equipped with a plurality of rotors.
FIG. **1B** is a plan view schematically showing one example of a basic configuration of an unmanned aerial vehicle equipped with a plurality of rotors.
FIG. **1C** is a side view schematically showing one example of a basic configuration of an unmanned aerial vehicle equipped with a plurality of rotors.
FIG. **1D** is a plan view schematically showing another example of a basic configuration of an unmanned aerial vehicle equipped with a plurality of rotors.
FIG. **2A** is a block diagram showing a basic configuration example of a battery-driven multicopter.
FIG. **2B** is a block diagram showing a basic configuration example of a series hybrid type multicopter.
FIG. **2C** is a block diagram showing a basic configuration example of a parallel hybrid type multicopter.
FIG. **3** is a block diagram showing a detailed configuration example of a relay circuit and a diagnostic device.
FIG. **4** is a flowchart showing example 1 of a fault diagnosis procedure by the diagnostic device.
FIG. **5** is a flowchart showing example 2 of a fault diagnosis procedure by the diagnostic device.
FIG. **6** is a flowchart showing example 3 of a fault diagnosis procedure by the diagnostic device.
FIG. **7** is a schematic diagram showing an example in which a multicopter, an agricultural machine, a server, and a terminal device are connected via a communication network.

### DESCRIPTION OF EMBODIMENTS

An unmanned aerial vehicle equipped with a plurality of rotors includes a rotation drive device to rotate the rotors (hereinafter referred to as "propellers"). Hereinafter, such an unmanned aerial vehicle is referred to as a "multicopter".

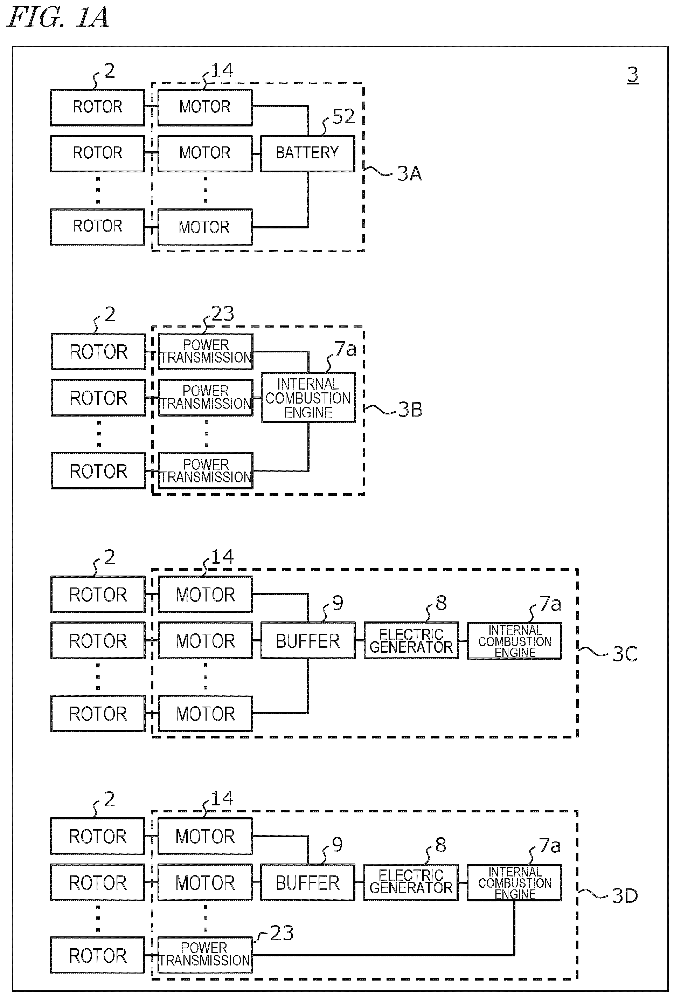

The configuration of rotation drive devices equipped in multicopters exists in various forms. FIG. **1A** is a schematic block diagram showing four examples of a rotation drive device **3** in the present disclosure.

The first rotation drive device **3A** shown in FIG. **1A** includes a plurality of electric motors (hereinafter referred to as "motors") **14** that rotate a plurality of rotors, and a battery **52** that stores electric power to be supplied to each motor **14.** The battery **52** is, for example, a secondary battery such as a polymer-type lithium-ion battery. Each rotor **2** is connected to the output shaft of its corresponding motor **14** and is rotated by the motor **14.** To increase payload and/or flight duration, it is necessary to increase the power storage capacity of the battery **52.** While the power storage capacity of the battery **52** can be increased by making the battery **52** larger, enlarging the battery **52** leads to an increase in weight.

The second rotation drive device **3B** shown in FIG. **1A** includes a power transmission system **23** mechanically connected to the rotor **2,** and an internal combustion engine **7a** that provides driving force (torque) to power transmission system **23.** The power transmission system **23** includes mechanical components such as gears or belts and transmits torque from the output shaft of internal the combustion engine **7a** to the rotor **2.** The internal combustion engine **7a** can efficiently generate mechanical energy through fuel combustion. Examples of the internal combustion engine **7a** may include gasoline engines, diesel engines, and hydrogen engines. Additionally, the number of internal combustion engines **7a** included in rotation drive device **3B** is not limited to one.

The third rotation drive device **3C** shown in FIG. **1A** includes a plurality of motors **14,** a power buffer **9** that stores electric power to be supplied to each motor **14,** an electric generator **8** such as an alternator that generates electric power, and an internal combustion engine **7a** that provides mechanical energy for power generation to the electric generator **8.** While a typical example of the power buffer **9** is a battery such as a secondary battery, it may also be a capacitor. In the third rotation drive device **3C,** even when the power buffer **9** does not have a large power storage capacity, it is possible to increase payload and/or flight duration because the electric generator **8** generates electric power using the driving force (mechanical energy) of the internal combustion engine **7a.** This type of drive is called "series hybrid driver". The electric generator **8** and internal combustion engine **7a** in a series hybrid driver are called a "range extender" as they extend the flight distance of the multicopter.

The fourth rotation drive device **3D** shown in FIG. **1A** includes a plurality of motors **14,** a power buffer **9** that stores electric power to be supplied to each motor **14,** an electric generator **8** such as an alternator that generates electric power, an internal combustion engine **7a** that provides driving force to the electric generator **8** for power generation, and a power transmission system **23** that transmits driving force generated by the internal combustion engine **7a** to the rotor 2 to rotate the rotor **2.** At least one rotor **2** of the plurality of rotors **2** is rotated by the internal combustion engine **7a,** while other rotors **2** are rotated by motors **14.** In the fourth rotation drive device **3D,** since mechanical energy generated by the internal combustion engine **7a** can be utilized for rotor rotation without conversion to electrical energy, energy utilization efficiency can be enhanced. This type of drive is called "parallel hybrid drive".

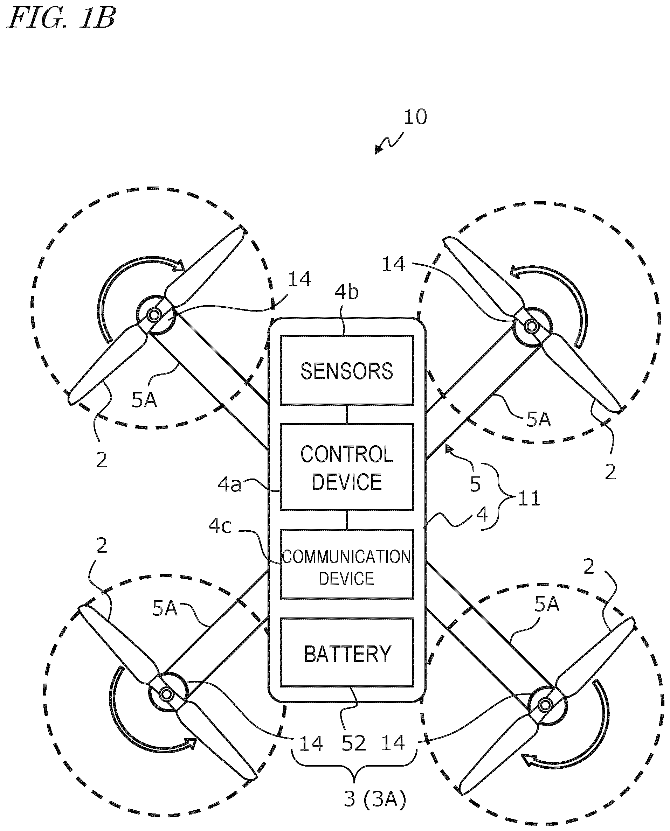

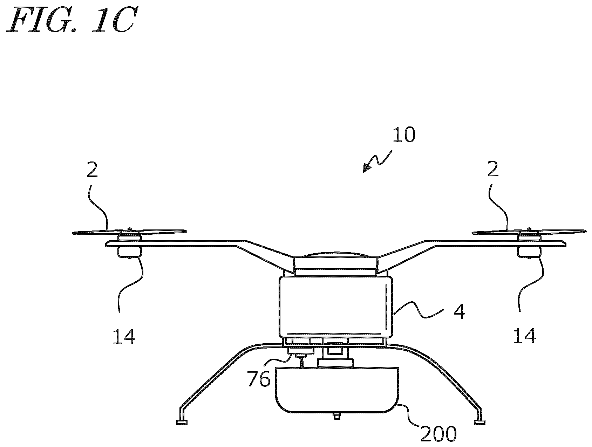

FIG. **1B** is a plan view schematically showing a basic configuration example of multicopter **10.** In the configuration example of FIG. **1B****,** a rotation drive device **3** is equipped with the first rotation drive device **3A** shown in FIG. **1A****.** That is, in this example, rotation drive device **3** (**3A**) includes the motors **14** and a battery **52.** FIG. **1C** is a side view schematically showing the multicopter.

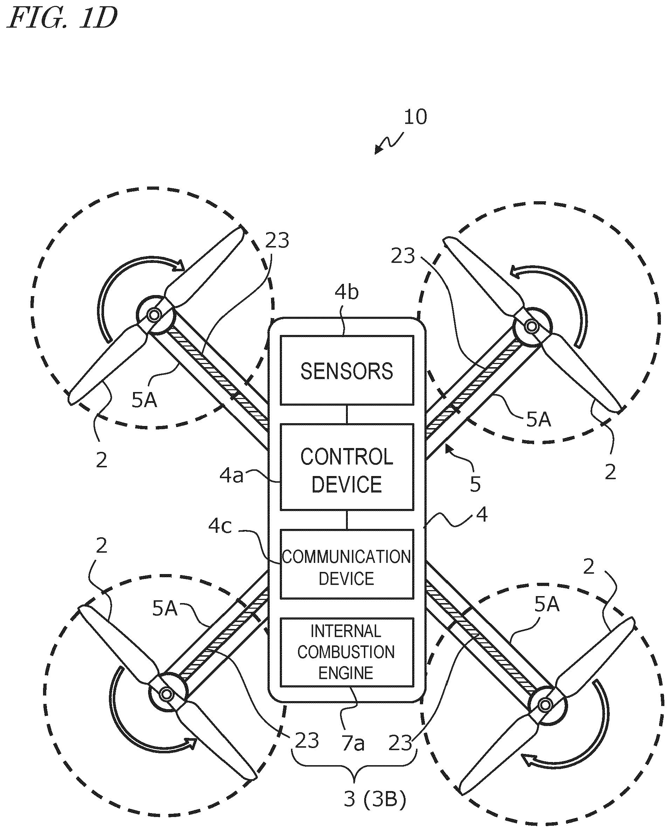

The multicopter **10** shown in FIGS. **1****B** and **1C** includes a plurality of rotors **2,** a main body **4,** and a body frame **5** that supports the rotors **2** and main body **4.** The body frame **5** supports the main body **4** at its central portion and supports the plurality of rotors **2** rotatably at the plurality of arms **5A** extending outward from the central portion. The motors **14** that rotate rotors **2** are provided near the ends of each arm **5A.**

In the example of FIG. **1B****,** the multicopter **10** is a quad-type multicopter (quadcopter) equipped with four rotors **2.** The rotors **2** positioned on the same diagonal line rotate in the same direction (clockwise or counterclockwise), while rotors **2** positioned on different diagonal lines rotate in opposite directions.

The main body **4** includes a control device **4a** that controls the operation of devices and components mounted on multicopter **10,** sensors **4b** connected to the control device **4a,** a communication device **4c** connected to the control device **4a,** and a battery **52.**

The control device **4a** may include, for example, a flight control device such as a flight controller and a higher-level computer (companion computer). The companion computer may perform advanced computational processing such as image processing, obstacle detection, and obstacle avoidance based on sensor data acquired by the sensors **4b.**

The sensors **4b** may include an acceleration sensor, an angular velocity sensor, a geomagnetic sensor, an atmospheric pressure sensor, an altitude sensor, temperature sensor, a flow sensor, an imaging device, a laser sensor, ultrasonic sensor, an obstacle contact sensor, and a GNSS (Global Navigation Satellite System) receiver. The acceleration sensor and angular velocity sensor may be mounted on the main body **4** as components of an IMU (Inertial Measurement Unit). Examples of laser sensors may include a laser range finder used for measuring distance to the ground, and 2D or 3D LiDAR.

The communication device **4c** may include a wireless communication module for signal transmission and reception with a ground-based transmitter or ground control station (GCS) via an antenna, and a mobile communication module that utilizes cellular communication networks. The communication device **4c** is configured to receive signals such as control commands transmitted from the ground and transmit sensor data such as image data acquired by sensors **4b** as telemetry information. The communication device **4c** may also include functions for communication between multicopters and satellite communication capabilities. The control device **4a** may connect to computers in the cloud through the communication device **4c.** The computer in the cloud may execute some or all of the functions of the companion computer.

A battery **52** is a secondary battery that is configured to store electric power through charging and supply electric power to motors **14** through discharging. Through the operation of the battery **52** and the plurality of motors **14,** a plurality of rotors **2** can be rotationally driven to generate desired thrust.

Each of the plurality of rotors **2** generally includes a plurality of blades with fixed pitch angles and generates thrust through rotation. The pitch angles may be variable. Not all of the plurality of rotors **2** need to have the same diameter (propeller diameter), and one or more rotors **2** may have a larger diameter than other rotors **2.** The thrust (static thrust) generated by rotating the rotor **2** is generally proportional to the cube of the rotor's diameter. Therefore, when the rotors **2** of different diameters are included, the rotors **2** with relatively large diameters may be called "main rotors" and the rotors **2** with relatively small diameters may be called "sub-rotors". Regardless of the size of the diameter, the rotors **2** capable of generating relatively large thrust and the rotors **2** capable of generating relatively small thrust may be included depending on the configuration of rotation drive device **3.** In such case, the rotors **2** capable of generating relatively large thrust may be called "main rotors" and the rotors **2** capable of generating relatively small thrust may be called "sub-rotors". For example, the rotors **2** that generate relatively large thrust per rotation may be called "main rotors" and the rotors **2** that generate relatively small thrust per rotation may be called "sub-rotors". In one example, main rotors may be positioned more inward than sub-rotors. In other words, the rotors **2** may be positioned such that the distance from the center of the body to the rotation axis of each main rotor is shorter than the distance from the center to the rotation axis of each sub-rotor.

In this example, the rotation drive device **3** includes a plurality of motors **14.** As mentioned above, the rotation drive device **3** may include the internal combustion engine **7a.**

FIG. **1D** is a plan view schematically showing a basic configuration example of a multicopter **10** equipped with the second rotation drive device **3B.** In the example shown in FIG. **1D****,** the internal combustion engine **7a** is supported by the main body **4.** In this example, the driving force generated by the internal combustion engine **7a** is transmitted to the plurality of rotors **2** through a plurality of power transmission systems **23** to rotate each rotor **2.** The control device **4a** may change the rotational speed of individual rotors **2** by controlling each power transmission system **23.**

In a "parallel hybrid drive" where some of the plurality of rotors **2** are rotated by the internal combustion engine **7a** and other rotors **2** are rotated by the motors **14,** the internal combustion engine **7a** and battery **52** are supported by the main body **4.** At least one of the plurality of rotors **2** is connected to the internal combustion engine **7a** through the power transmission system **23,** and other rotors **2** are connected to the motors **14.**

In such a parallel hybrid drive, the diameter of one or more rotors **2** rotated by the internal combustion engine **7a** may be larger than the diameter of other rotors 2 rotated by the motors **14.** In other words, the internal combustion engine **7a** may be used to rotate the main rotors and the motors **14** may be used to rotate the sub-rotors. In such case, the main rotors are mainly used for generating thrust, and the sub-rotors are used for both generating thrust and attitude control. The main rotors may be called "booster rotors" and the sub-rotors may be called "attitude control rotors".

In the parallel hybrid drive, the internal combustion engine **7a** is used for both thrust generation and power generation. By selectively transmitting driving force (torque) generated by the internal combustion engine to either or both of the rotor and electric generator, it is possible to achieve balanced thrust generation and power generation.

When a multicopter is equipped with an internal combustion engine **7a** and uses the internal combustion engine **7a** for at least one of thrust generation and power generation, this contributes to increased payload and flight duration. It is desirable to perform attitude control of the multicopter by rotating propellers using motors, which have superior response characteristics compared to internal combustion engines. Therefore, in applications where accurate attitude control of the multicopter is required, it is desirable to adopt parallel hybrid drive or series hybrid drive to increase payload and flight duration.

Through increased payload and flight duration, the applications of multicopters can be further expanded. For example, in the agricultural field, multicopters are currently being used for agricultural chemical spraying or crop growth monitoring. Various agricultural work can be performed from the air by connecting various ground work machines (hereinafter may be simply referred to as "work machines") to the multicopter. Agricultural work machines are sometimes referred to as "implements". Examples of implements may include sprayers for spraying chemicals on crops, mowers, seeders, spreaders (fertilizer applicators), rakes, balers, harvesters, plows, harrows, or rotary tillers. Work vehicles such as tractors are not included in "implements" in this disclosure.

In the example shown in FIG. **1C****,** an implement **200** capable of dispersing substances such as agricultural chemicals or fertilizers onto a field or crops in the field is connected to multicopter **10.** Increased payload and flight duration enable the implement **200** to achieve a larger size and/or multi-functionality. For example, by changing the implement **200** connected to multicopter **10,** various ground operations (agricultural work) including liquid application, granular application, fertilization, thinning, weeding, transplanting, direct seeding, and harvesting can be performed. The implement **200** may be equipped with mechanisms such as robotic hands. In that case, a single implement **200** can perform various ground operations. When the implement **200** is equipped with space large enough to store materials, the implement **200** can also transport agricultural materials or harvested crops over a wide area.

In the example shown in FIG. **1C****,** the multicopter **10** is equipped with the power supply **76.** The power supply **76** is a device that supplies power to the implement **200** from driving energy sources such as a battery **52** or an electric generator **8** included in the multicopter **10.** Various functions of implement **200** may be performed using this power. The implement **200** includes actuators such as motors that operate using power obtained from the power supply **76** of the multicopter **10.** The implement **200** preferably includes a battery for storing power.

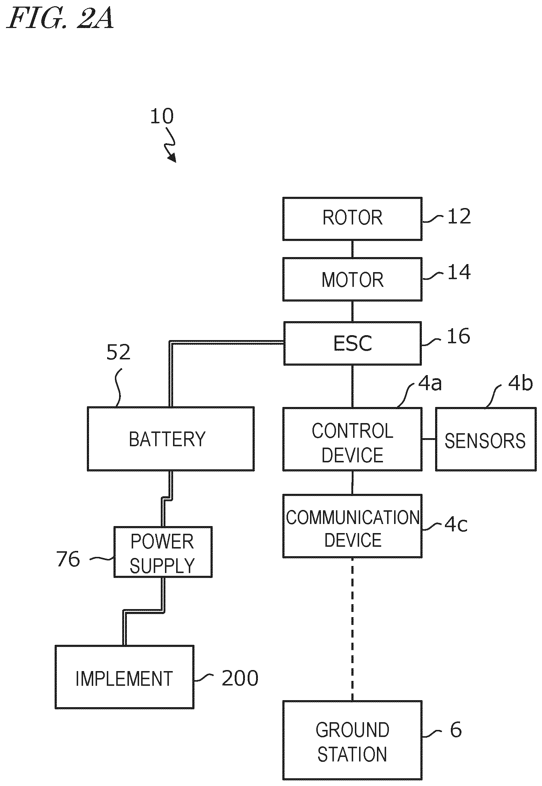

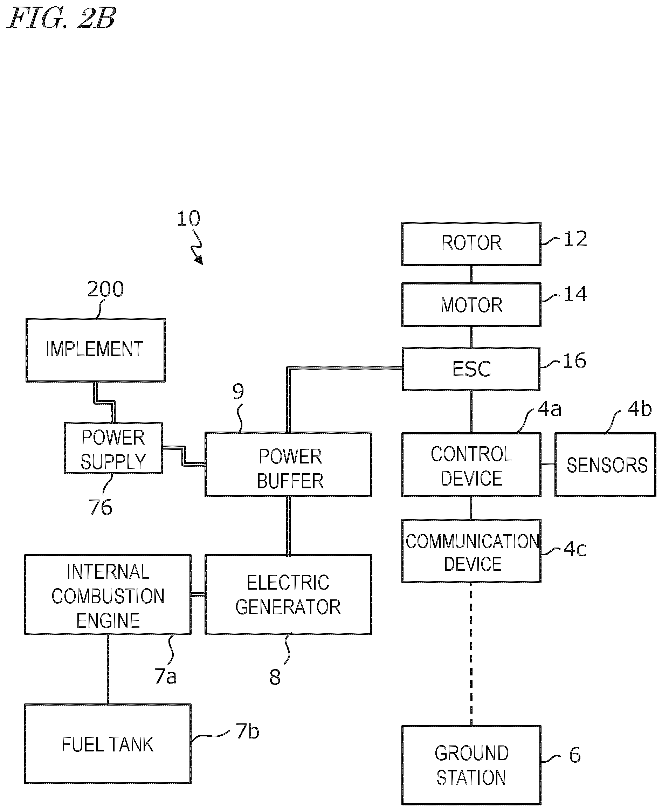

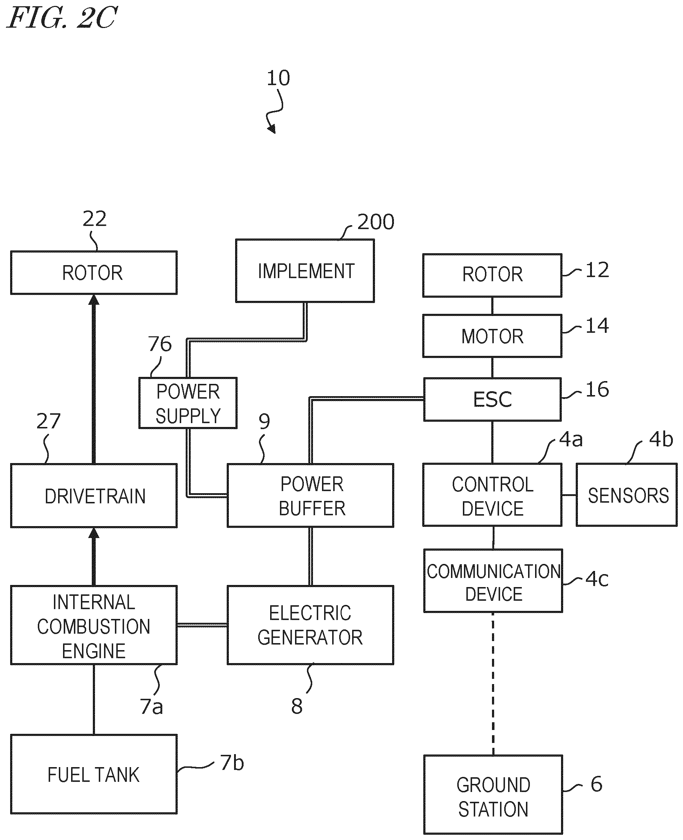

FIG. **2A** is a block diagram showing a basic configuration example of a battery-driven multicopter **10.** The battery-driven multicopter **10** includes a plurality of rotors **12,** a plurality of motors **14** each rotating a respective one of the plurality of rotors **12,** a plurality of ESCs (Electric Speed Controllers) **16** each having a motor drive circuit that drives a respective one of the plurality of motors **14,** a battery **52** that supplies power to each motor **14** through respective ESC **16,** a control device **4a** to control the plurality of ESCs **16** to control attitude while flying, sensors **4b,** a communication device **4c,** and a power supply **76** that is electrically connected to the battery **52.** Rotor **12** is an example of rotor **2.** The devices such as control device **4a,** sensors **4b,** and communication device **4c** are communicably connected to each other via, for example, a CAN (Controller Area Network) bus. In FIG. **2A****,** for simplicity, the rotor **12,** the motor **14,** and the ESC **16** are each shown by a single block, but the numbers of rotors **12,** motors **14,** and ESCs **16** are each plural. This also applies to FIGs. **2B** and **2C****.**

The control device **4a** may receive control commands wirelessly from, for example, a ground station **6** on the ground through the communication device **4c.** The number of ground stations **6** is not limited to one, and the ground station **6** may be distributed across a plurality of locations. The communication device **4c** may also wirelessly receive control commands from an operator's control terminal on the ground. The control device **4a** may have functions to automatically or autonomously execute takeoff, flight, obstacle avoidance, and landing operations based on sensor data obtained from the sensors **4b.**

The control device **4a** may be configured to communicate with the implement **200** connected to the power supply **76** and obtain signals indicating the state of the implement **200** from the implement **200.** Additionally, the control device **4a** may provide signals to control the operation of implement **200.** Furthermore, the implement **200** may generate signals to instruct the operation of multicopter **10** and transmit them to the control device **4a.** Such communication between the control device **4a** and the implement **200** may be conducted through wired or wireless means.

The multicopter **10** according to an embodiment of the present disclosure further includes a relay circuit **80** configured to interrupt control signals transmitted from the control device **4a** to each ESC **16** in response to a stop signal to stop the rotation of the plurality of rotors **12,** and a diagnostic device **82** that executes fault diagnosis of the relay circuit **80** based on the output from the relay circuit **80.** In this description, the relay circuit **80** and the diagnostic device **82** are collectively referred to as a "termination system". The termination system may be utilized to emergency stop the rotation of the plurality of rotors **12.** Therefore, the termination system may also be referred to as a "safety device".

The relay circuit **80** is electrically connected between the plurality of ESCs **16** (or the plurality of motor drive circuits) and the control device **4a.** The relay circuit **80** has a plurality of relays corresponding to the plurality of ESCs **16.** The detailed configuration and operation of the termination system including the relay circuit **80** and the diagnostic device **82** will be described in detail later.

FIG. **2B** is a block diagram showing a basic configuration example of a series hybrid drive type multicopter **10.** The series hybrid drive type multicopter **10** includes, similar to the battery-driven multicopter **10,** a plurality of rotors **12,** a plurality of motors **14,** a plurality of ESCs **16,** a control device **4a,** sensors **4b,** a communication device **4c,** a relay circuit **80,** and a diagnostic device **82.** The series hybrid drive type multicopter **10** shown in the figure further includes an internal combustion engine **7a,** a fuel tank **7b** that stores fuel for the internal combustion engine **7a,** an electric generator **8** that is driven by the internal combustion engine **7a** to generate electric power, a power buffer **9** that temporarily stores electric power generated by the electric generator **8,** and a power supply **76** that is electrically connected to the power buffer **9.** The power buffer **9** is, for example, a battery such as a secondary battery. Electric power generated by the electric generator **8** is supplied to motors **14** through the power buffer **9** and ESCs **16.** Additionally, the electric power generated by the electric generator **8** may be supplied to the implement **200** through the power supply **76.**

FIG. **2C** is a block diagram showing a basic configuration example of a parallel hybrid drive type multicopter **10.** The parallel hybrid drive type multicopter **10** includes, similar to the series hybrid drive type multicopter **10,** a plurality of rotors **12,** a plurality of motors **14,** a plurality of ESCs **16,** a control device **4a,** sensors **4b,** a communication device **4c,** a relay circuit **80,** a diagnostic device **82,** an internal combustion engine **7a,** a fuel tank **7b,** an electric generator **8,** a power buffer **9,** and a power supply **76.** The parallel hybrid drive type multicopter **10** further includes a drivetrain **27** that transmits driving force from the internal combustion engine **7a,** and a rotor **22** to rotate upon the receiving driving force from the internal combustion engine **7a** through the drivetrain **27.** The rotor **22** is an example of rotor **2.** The number of rotors **22** connected to drivetrain **27** and rotated may be one or two or more.

In the parallel hybrid drive type multicopter **10,** the internal combustion engine **7a** not only drives the electric generator **8** to generate power, but also mechanically transmits energy to the rotor **22** to rotate the rotor **22.** In contrast, in the series hybrid drive type multicopter **10,** all rotors **12** are rotated by electric power generated by the electric generator **8.** Therefore, in the series hybrid drive type multicopter **10,** when the electric generator **8** is, for example, a fuel cell, the internal combustion engine **7a** is not an essential component.

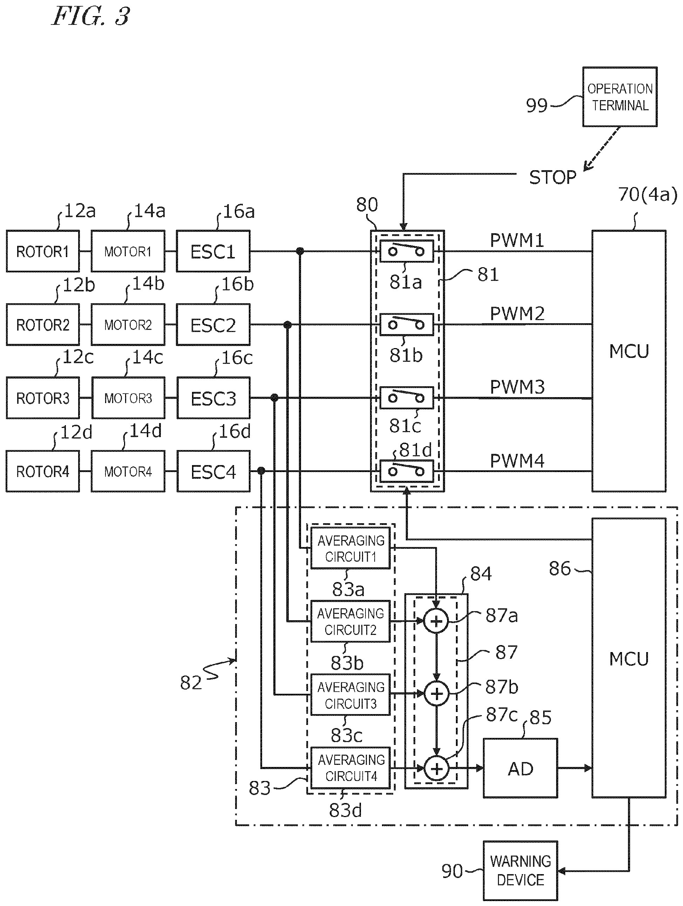

FIG. **3** is a block diagram showing a detailed configuration example of the relay circuit **80** and the diagnostic device 82. FIG. **3** shows a configuration example of a relay circuit **80** and a diagnostic device **82** (that is, a termination system) mounted on a quad-type multicopter. However, the multicopter is not limited to a quad-type multicopter and may be, for example, a hexa-type multicopter (hexacopter) with six rotors, or an octo-type multicopter (octocopter) with eight rotors.

In the example shown in FIG. **3****,** the quad-type multicopter includes four rotors **12a-12d,** four motors **14a-14d** that respectively rotate the four rotors **12a-12d,** four ESCs **16a-16d** that respectively drive the four motors **14a-14d,** a controller (Micro Controller Unit: MCU) **70,** a relay circuit **80** electrically connected between the four ESCs **16a-16d** and the controller **70,** and a diagnostic device **82** connected between the relay circuit **80** and the four ESCs **16a-16d.** The rotor **12a,** motor **14a,** and ESC **16a** may be collectively referred to as "first system", the rotor **12b,** motor **14b,** and ESC **16b** as "second system", the rotor **12c,** motor **14c,** and ESC **16c** as "third system", and the rotor **12d,** motor **14d,** and ESC **16d** as "fourth system".

The controller **70** controls the operation of each of the plurality of motor drive circuits (ESCs **16**) and transmits control signals to control the rotation speed of the rotors **12** to each of the plurality of motor drive circuits. In other words, the controller **70** transmits control commands to control the rotation speed of each rotor **12** to the first to fourth systems respectively. Rotation speed is also called revolution number. The revolution number is the number of revolutions per unit time, expressed, for example, in revolutions per minute (rpm). In the example shown in FIG. **3****,** the controller **70** controls the operation of each of the four ESCs **16a-16d** and transmits control signals to control the rotation speed of each rotor **12** to each of the four ESCs **16a-16d.** An example of the controller **70** is the aforementioned flight controller. In the following description, to distinguish from the second controller to be described later, the controller **70** is referred to as "first controller **70".**

In an embodiment of the present disclosure, an example of a control signal to control the rotation speed of each rotor **12** is a PWM (Pulse Width Modulation) signal, which is a pulse signal. The first controller **70** outputs a PWM signal having a duty ratio that defines the command value of the rotation speed of each motor **14.** The duty ratio has a magnitude proportional to the rotation speed (command value). The duty ratio during fault diagnosis described later is set, for example, in the range of 40% to 80%.

The controller **70** is further configured to change the operation of the plurality of motor drive circuits from a flight state of the multicopter to a state where flight is not possible in response to a stop signal (shown as STOP in FIG. **3**). The stop signal is a signal transmitted to stop the rotation of the plurality of rotors **12.** In other words, the stop signal is a signal transmitted to stop the operation of the plurality of motor drive circuits.

The relay circuit **80** is configured to interrupt control signals transmitted from the first controller **70** to each ESC **16** in response to the stop signal. The relay circuit **80** has a plurality of relays **81,** each of which is configured to interrupt the control signal in response to the stop signal.

The termination system in this embodiment is configured to output a stop signal to the controller **70** and change the operation of the plurality of motor drive circuits from a flight state of the multicopter to a state where flight is not possible. The termination system may include an operation terminal **99** to output a stop signal to the controller **70.** The operation terminal **99** is capable of notifying the multicopter of a flight stop command, for example, when the multicopter is positioned above a field. This sends a stop signal to the controller **70.** Examples of operation terminal **99** include terminal devices, mobile terminals such as smartphones or tablet computers. The stop signal is transmitted, for example, from the aforementioned companion computer in response to a flight stop command transmitted from the operation terminal **99** used by an operator. Alternatively, the companion computer may determine whether there is an emergency situation based on, for example, sensor data obtained from the sensors **4b,** and transmit a stop signal to the relay circuit **80** according to the determination result. The operator can intentionally stop the rotation of the multiple rotors of the multicopter by transmitting a flight stop command from the operation terminal **99** to the multicopter. For example, when flying over a place with few buildings such as a field (agricultural work site), in case of an emergency where flight cannot be continued or flight is unstable, an emergency response such as forced landing or forced crash of the multicopter can be performed.

In the example shown in FIG. **3****,** the relay circuit **80** is configured to interrupt PWM signals transmitted from the first controller **70** to each ESC **16** in response to a stop signal to stop the rotation of the four rotors **12a-12d.** Specifically, the relay circuit **80** has four relays **81a-81d,** each of which is configured to interrupt the PWM signal in response to the stop signal. The relay circuit **80** may further include transistors for turning on and off each relay. One end of the relay **81a** is connected to the ESC **16a,** and the other end of the relay **81a** is connected to the first controller **70.** One end of the relay **81b** is connected to the ESC **16b,** and the other end of the relay **81b** is connected to the first controller **70.** One end of the relay **81c** is connected to the ESC **16c,** and the other end of the relay **81c** is connected to the first controller **70.** One end of the relay **81d** is connected to the ESC **16d,** and the other end of the relay **81d** is connected to the first controller **70.**

PWM signals PWM1-PWM4 transmitted from the first controller **70** are input to the first to fourth systems through the four relays **81a-81d** respectively. During operations such as takeoff, flight, or landing, all four relays **81a-81d** are constantly in the ON state. In an emergency, all four relays **81a-81d** change to the OFF state in response to the stop signal.

Each of the plurality of relays in the relay circuit **80** may potentially experience an ON failure or an OFF failure. An ON failure is a failure where the relay is always in the ON state and does not transition to the OFF state, and an OFF failure is a failure where the relay is always in the OFF state and does not transition to the ON state. An ON failure may be referred to as "ON-sticking" and an OFF failure as "OFF-sticking".

To make the relay circuit **80** function as a safety device, it is important to verify the operation of the relay circuit **80** before the multicopter flies. The diagnostic device **82** is configured to perform diagnosis of ON/OFF failures of the plurality of relays. The diagnostic device **82** preferably executes fault diagnosis of the relay circuit **80** before the multicopter takes off. In other words, the diagnostic device **82** preferably performs diagnosis of ON/OFF failures of the plurality of relays before the multicopter takes off. However, the timing of ON/OFF failure diagnosis is not limited to before takeoff and may be, for example, after landing.

The multicopter according to an embodiment of the present disclosure may include a warning device **90** as shown in FIG. **3****.** The warning device **90** issues a warning about an ON/OFF failure of at least one of the plurality of relays. Examples of the warning device **90** include a buzzer that emits a warning sound to report a relay failure, or an optical device such as an LED (Light Emitting Diode) lamp. For example, the diagnostic device **82** may perform diagnosis of ON/OFF failures of the plurality of relays when the multicopter is powered on. The diagnostic device **82** causes the warning device **90** to issue a warning when it detects an ON/OFF failure of at least one of the plurality of relays. This makes it possible to verify the operation of the relay circuit **80** before the multicopter flies, ensuring the safety of the multicopter. When a failure of the relay circuit **80** is detected, it is possible to prompt the operator to cancel the flight of the multicopter, for example, by a warning sound emitted by the buzzer.

The diagnostic device **82** includes a plurality of averaging circuits **83,** an integration circuit **84,** an analog-to-digital (AD) converter circuit **85,** and a second controller (MCU) **86.** However, if the second controller **86** has an AD conversion function, the AD converter circuit **85** is not necessary. The plurality of averaging circuits **83** are connected to the ESC **16** side of the plurality of relays respectively. Each of the plurality of averaging circuits **83** outputs an analog voltage corresponding to the duty ratio of the PWM signal. The integration circuit **84** includes one or more adders **87** and outputs a summed value by summing the output values from each of the plurality of averaging circuits **83.** The AD converter circuit **85** converts the summed value output from the integration circuit **84** as an analog signal into a digital signal. The second controller **86** detects an ON/OFF failure of at least one of the plurality of relays **81** based on the summed value output from the integration circuit **84.** More specifically, the second controller **86** detects an ON/OFF failure of at least one of the plurality of relays based on the output value of the digital signal output from the AD converter circuit **85.**

In the example shown in FIG. **3****,** four averaging circuits **83a-83d** are connected to the ESC **16** side of four relays **81a-81d** respectively. Specifically, the averaging circuit **83a** is connected to one end of the relay **81a** and to the integration circuit **84.** The averaging circuit **83b** is connected to one end of the relay **81b** and to the integration circuit **84.** The averaging circuit **83c** is connected to one end of the relay **81c** and to the integration circuit **84.** The averaging circuit **83d** is connected to one end of the relay **81d** and to the integration circuit **84.** With such electrical connections, PWM signals output from the first controller **70** are input to each ESC **16** and each averaging circuit **83** through each relay **81.**

Each averaging circuit **83** converts the input PWM signal into an analog voltage signal corresponding to its duty ratio. For example, with a duty ratio of 40%, each averaging circuit **83** converts the input PWM signal to an analog voltage signal of 0.25V. With a duty ratio of 80%, each averaging circuit **83** converts the input PWM signal to an analog voltage signal of 0.5V.

The integration circuit **84** includes an adder **87a** that adds the output from the averaging circuit **83a** and the output from the averaging circuit **83b,** an adder **87b** that adds the output from the averaging circuit **83c** and the output from the adder **87a,** and an adder **87c** that adds the output from the averaging circuit **83d** and the output from the adder **87b.** For example, with a duty ratio of 40%, when all four relays **81a-81d** are in the ON state, the summed value output from the integration circuit **84** is 1V. With a duty ratio of 80%, when all four relays **81a-81d** are in the ON state, the summed value output from the integration circuit **84** is 2V. Thus, in the four systems, with a duty ratio of 40-80%, the summed value output from the integration circuit **84** is, for example, 1-2V. In other words, a digital signal corresponding to an analog signal of 1-2V is input to the second controller **86.** In the case of eight systems, the summed value output from the integration circuit **84** would be, for example, 2-4V.

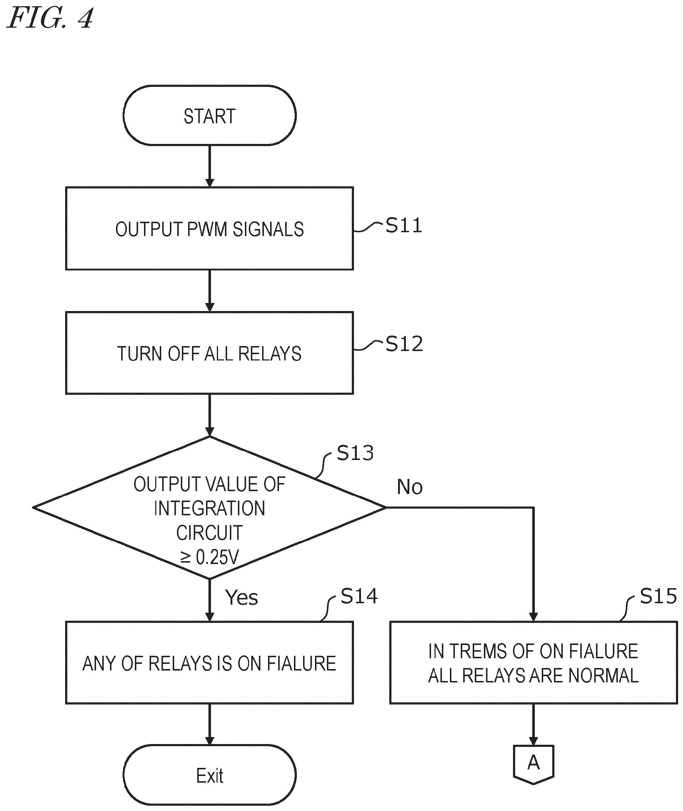

FIG. **4** is a flowchart showing example 1 of a fault diagnosis procedure by the diagnostic device **82.** Example 1 shows a procedure for diagnosing whether any of the plurality of relays has an ON failure. In an embodiment of the present disclosure, the diagnostic device **82** performs fault diagnosis when the multicopter is powered on. With reference to FIG. **4****,** the method for diagnosing an ON failure of a relay will be explained in detail.

First, the first controller **70** outputs a PWM signal to each of the first to fourth systems (step S11). In example 1, the duty ratio of the PWM signal is 40%. However, the duty ratio is not limited to this value.

Next, the second controller **86** of the diagnostic device **82** outputs a control signal for relay opening and closing to the relay circuit **80,** to turn OFF all four relays **81a-81d** (step S12). The second controller **86** controls the ON/OFF operation of each of the four relays **81a-81d.** For example, the second controller **86** controls the four relays **81a-81d** so that all four relays **81a-81d** are in the OFF state when the PWM signal is input from the first controller **70** to the relay circuit **80.** However, the order of the processes in steps S11 and S12 may be reversed. That is, the PWM signal may be input from the first controller **70** to the relay circuit **80** after all four relays **81a-81d** are turned OFF.

The second controller **86** determines (or diagnoses) whether at least one of the four relays **81a-81d** has an ON failure by comparing the summed value output from the integration circuit **84** with a first threshold (step S13). Here, the first threshold is determined based on the duty ratio of the PWM signal. In example 1, the duty ratio is 40%, and in this case, an analog voltage signal of 0.25V is output from the averaging circuit connected to a relay in the ON state. If at least one of the four relays **81a-81d** is in the ON state, a summed value of 0.25V or more is output from the integration circuit **84.** Therefore, 0.25V is set as the first threshold.

If all four relays **81a-81d** are in the OFF state, the output value of the output signal from the integration circuit **84** (or AD converter circuit **85**) is zero. In contrast, if at least one of the four relays **81a-81d** has an ON failure, an output signal with an output value proportional to the number of relays with an ON failure is output from the integration circuit **84.** In example 1, for instance, if one of the four relays **81a-81d** has an ON failure, the summed value output from the integration circuit **84** is 0.25V, and if two of the four relays **81a-81d** have an ON failure, the summed value output from the integration circuit **84** is 0.5V.

If the second controller **86** determines that the summed value output from the integration circuit **84** is equal to or greater than the first threshold (Yes in step S13), it determines that at least one of the four relays **81a-81d** has an ON failure (step S14). In contrast, if the second controller **86** determines that the summed value output from the integration circuit **84** is less than the first threshold (No in step S13), it determines that all four relays **81a-81d** are normal in terms of ON failure (step S15).

When the second controller **86** detects an ON failure of at least one of the four relays **81a-81d** in step S14, it may send a warning command to the warning device **90.** The warning device **90** emits a warning sound, for example, in response to the warning command. When the second controller **86** determines in step S15 that all relays are normal in terms of ON failure, it proceeds to the process for diagnosing OFF failure.

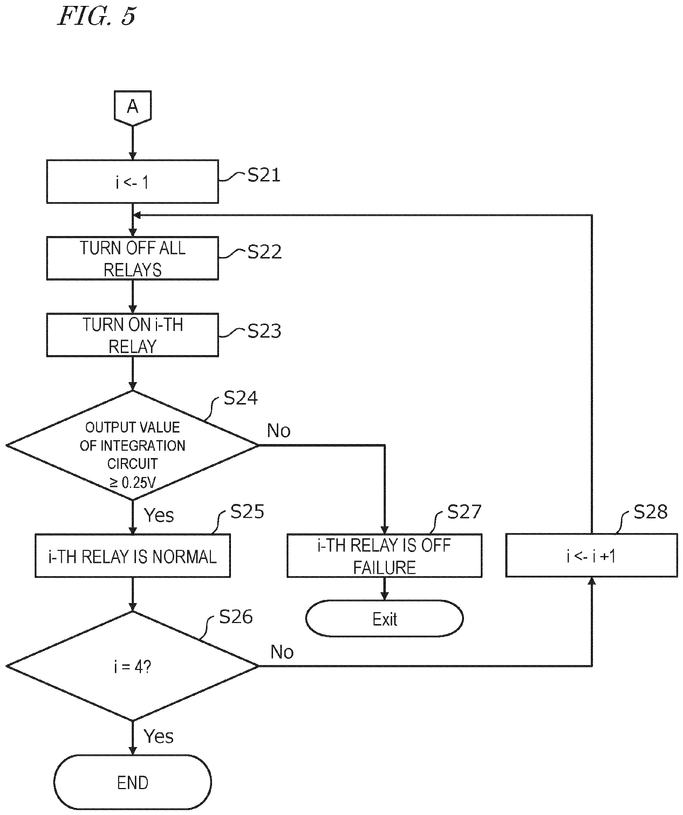

FIG. **5** is a flowchart showing example 2 of a fault diagnosis procedure performed by the diagnostic device **82.** Example 2 shows a procedure for identifying a relay with an OFF failure among the plurality of relays. The duty ratio of the PWM signal in example 2 is 40%, similar to example 1. The diagnostic device **82** sequentially executes OFF failure diagnosis for the relay **81a,** relay **81b,** relay **81c,** and relay **81d** in this order.

First, the first controller **70** selects the relay **81a,** which is first in the diagnostic order, as the target for OFF failure diagnosis (step S21). Next, the second controller **86** outputs a control signal to the relay circuit **80** to turn OFF all four relays **81a-81d,** thereby turning OFF all four relays **81a-81d** (step S22). Then, the second controller **86** controls the relay circuit **80** to turn ON relay **81a** while keeping the three relays **81b-81d** in the OFF state (step S23). In other words, the second controller **86** controls the four relays **81a-81d** so that after all four relays **81a-81d** are turned OFF when the PWM signal is input from the first controller **70** to the relay circuit **80,** only relay **81a** among the four relays **81a-81d** turns ON.

The second controller **86** identifies a relay with an OFF failure among the four relays **81a-81d** by comparing the summed value output from the integration circuit **84** with a second threshold. Here, the second threshold is determined based on the duty ratio of the PWM signal, similar to the first threshold. In example 2, the duty ratio is 40%, and in this case, an analog voltage signal of 0.25V is output from the averaging circuit connected to a relay in the ON state. Therefore, 0.25V is set as the second threshold. If all four relays **81a-81d** are normal in terms of OFF failure, when the relay selected as the diagnosis target among the four relays **81a-81d** is in the ON state, the summed value output from the integration circuit **84** (or AD converter circuit **85**) is 0.25V. In contrast, if the relay selected as the diagnosis target among the four relays **81a-81d** has an OFF failure, since the relay will not turn ON, the summed value output from the integration circuit **84** is 0V.

If the second controller **86** determines that the summed value output from the integration circuit **84** is equal to or greater than the second threshold (Yes in step S24), it determines that the relay selected as the diagnosis target among the four relays **81a-81d** is normal in terms of OFF failure (step S25). In contrast, if the second controller **86** determines that the summed value output from the integration circuit **84** is less than the second threshold (No in step S24), it determines that the relay selected as the diagnosis target among the four relays **81a-81d** has an OFF failure (step S27).

When the second controller **86** detects an OFF failure of one of the four relays **81a-81d** in step S27, it may send a warning command to the warning device **90.** The warning device **90** emits a warning sound, for example, in response to the warning command.

In this way, the second controller **86** completes the OFF failure diagnosis for the relay **81a,** which is first in the diagnostic order. Next, the second controller **86** performs OFF failure diagnosis for the relay **81b,** which is second in the diagnostic order, following the same procedure as for the OFF failure diagnosis of the relay **81a** (step S28). Subsequently, the second controller **86** repeatedly executes the processes from step S22 to S24 to perform OFF failure diagnosis for the relay **81c,** which is third in the diagnostic order, and the relay **81d,** which is fourth in the diagnostic order, thereby completing the diagnosis of all relays (step S26).

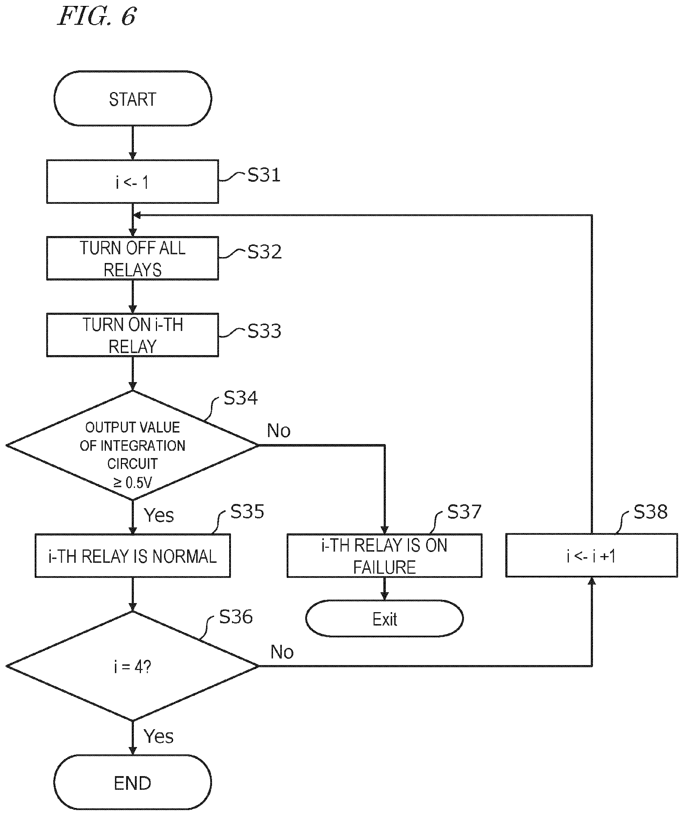

FIG. **6** is a flowchart showing example 3 of a fault diagnosis procedure by the diagnostic device **82.** Example 3 shows a procedure for identifying a relay with an ON failure among the plurality of relays. The difference between the procedure shown in example 3 and the procedure shown in example 2 is the difference in thresholds. The following mainly explains the points that differ from the procedure in example 2.

When the diagnostic device **82** has determined that any of the four relays **81a-81d** has an ON failure as a result of fault diagnosis according to the procedure of example 1, it is possible to identify which relay among the four relays **81a-81d** has an ON failure by performing further fault diagnosis according to the procedure of example 3.

A third threshold used to determine an ON failure of one of the four relays **81a-81d** is larger than the second threshold used to determine an OFF failure of one of the four relays **81a-81d.** The third threshold is determined based on the duty ratio of the PWM signal, similar to the first and second thresholds. In example 3, the duty ratio of the PWM signal is 40%, and the third threshold is set to 0.5V.

When none of the four relays **81a-81d** has an ON failure, as each of the four relays **81a-81d** is turned ON one by one, the summed value output from the integration circuit **84** becomes 0.25V each time. In contrast, when one of the four relays **81a-81d** has an ON failure, when relays other than the relay with the ON failure are turned ON, the summed value output from the integration circuit **84** becomes 0.5V, and when the relay with the ON failure is turned ON, the summed value output from the integration circuit **84** becomes 0.25V.

If the second controller **86** determines that the summed value output from the integration circuit **84** is equal to or greater than the third threshold (Yes in step S34), it determines that the relay selected as the diagnosis target among the four relays **81a-81d** is normal in terms of ON failure (step S35). In contrast, if the second controller **86** determines that the summed value output from the integration circuit **84** is less than the third threshold (No in step S34), it determines that the relay selected as the diagnosis target among the four relays **81a-81d** has an ON failure (step S37). In this way, the second controller **86** can identify which relay among the plurality of relays has an ON failure.

Speaking of general relay drive circuits, while it is possible to verify whether an output signal is correctly output from the circuit, it is difficult to verify whether the circuit is operating normally, that is, to verify the ON/OFF operation of relays. As mentioned earlier, since relay circuits may experience ON/OFF failures, it is more important to verify the actual output state than the correctness of the control signal given to the relay circuit. Especially for relay circuits functioning as safety devices mounted on multicopters, operation verification before flight is required. When using a general-purpose ECU (Electronic Control Unit), as the number of relays subject to ON/OFF control increases, it becomes difficult to monitor the state of output signals output from all relays due to constraints on the number of ports or optimization of connectors. Similar challenges remain even when using a custom (dedicated) ECU.

The termination system according to an embodiment of the present disclosure, and the multicopter equipped with such a termination system, enable fault diagnosis of the relay circuit with a relatively simple circuit configuration. It is possible to reduce not only the number of MCU ports but also the number of AD converter circuits. Even if the number of rotors, that is, the number of relays increases, it is possible to appropriately perform fault diagnosis of the relay circuit using, for example, a general-purpose ECU without increasing the number of input circuits. This is also advantageous in terms of cost.

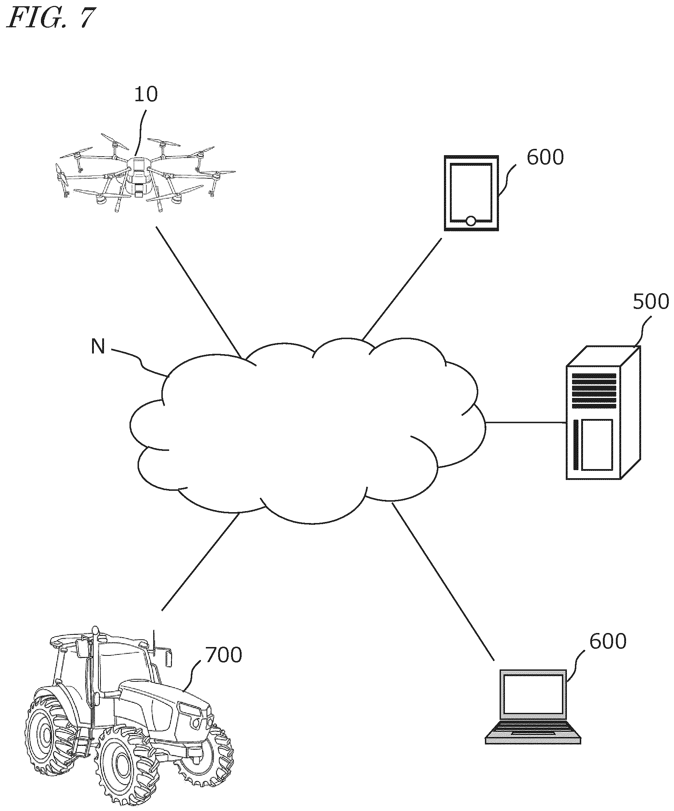

The control device **4a,** as mentioned earlier, may include, for example, a flight control device such as a flight controller and a higher-level computer (companion computer). The companion computer may execute each process required for fault diagnosis and provide flight stop commands to the relay circuit **80** based on the results of these processes. Additionally, some or all of the functions of electronic equipment such as the control device **4a** and the diagnostic device **82** mounted on the multicopter **10** may be realized by one or more servers (computers) **500** or terminal devices (including portable and fixed types) **600** connected to the communication device **4c** of the multicopter **10** via a communication network **N,** as shown in FIG. **7****.** Agricultural machines **700** such as tractors may be connected to such a communication network **N,** and communication may be performed between the multicopter 10 and the agricultural machine **700.** Through the communication network **N,** part of the data used for processing by the control device **4a** or the diagnostic device **82,** and control signals for the multicopter **10,** may be provided to the multicopter **10** from the agricultural machine **700.**

Systems providing various functions in the embodiments can also be attached afterward to multicopters that do not have those functions. Such systems can be manufactured and sold independently of multicopters. Computer programs used for such systems can also be manufactured and sold independently of multicopters. Computer programs can be provided stored on a non-transitory computer-readable storage media, for example. Computer programs can also be provided through downloads via telecommunications lines (such as the Internet).

This description discloses solutions described in the following items.

### [Item 1]

An unmanned aerial vehicle comprising a plurality of rotors, the unmanned aerial vehicle comprising:
a plurality of electric motors, each configured to rotate a respective one of the plurality of rotors;
a plurality of motor drive circuits, each configured to drive a respective one of the plurality of electric motors; and
a controller configured to control operation of the plurality of motor drive circuits,
wherein the controller is configured to change the operation of the plurality of motor drive circuits from a flight state of the unmanned aerial vehicle to a state where flight is not possible in response to a stop signal.

### [Item 2]

The unmanned aerial vehicle according to Item 1, further comprising a relay circuit electrically connected between the plurality of motor drive circuits and the controller; wherein
the relay circuit is configured to interrupt a control signal transmitted from the controller to control rotation speed of the rotors in response to the stop signal to stop the operation of the plurality of motor drive circuits.

### [Item 3]

The unmanned aerial vehicle according to Item 2, further comprising a diagnostic device configured to execute fault diagnosis of the relay circuit based on an output from the relay circuit.

### [Item 4]

The unmanned aerial vehicle according to Item 3, wherein the diagnostic device executes fault diagnosis of the relay circuit before takeoff of the unmanned aerial vehicle.

### [Item 5]

The unmanned aerial vehicle according to Item 4, wherein the relay circuit includes a plurality of relays, each of which is configured to interrupt the control signal in response to the stop signal.

### [Item 6]

The unmanned aerial vehicle according to Item 5, wherein the diagnostic device executes diagnosis of ON/OFF failures of the plurality of relays.

### [Item 7]

The unmanned aerial vehicle according to Item 6, further comprising a warning device configured to issue a warning about an ON/OFF failure of at least one of the plurality of relays; wherein
the diagnostic device is configured to:
execute the diagnosis of ON/OFF failures of the plurality of relays when the unmanned aerial vehicle is powered on, and
cause the warning device to issue the warning when an ON/OFF failure of at least one of the plurality of relays is detected.

### [Item 8]

The unmanned aerial vehicle according to Item 6 or 7, wherein
the controller is a first controller; and
the diagnostic device includes:
   a plurality of averaging circuits, each connected to a motor drive circuit side of a respective one of the plurality of relays;
   an integration circuit configured to output a summed value by summing output values from each of the plurality of averaging circuits; and
   a second controller configured to detect an ON/OFF failure of at least one of the plurality of relays based on the summed value output from the integration circuit.

### [Item 9]

The unmanned aerial vehicle according to Item 8, wherein the control signal is a PWM signal; and
each of the plurality of averaging circuits outputs an analog voltage corresponding to a duty ratio of the PWM signal.

### [Item 10]

The unmanned aerial vehicle according to Item 8 or 9, wherein the second controller is configured to:
control ON/OFF operation of each of the plurality of relays, and
determine that at least one of the plurality of relays has an ON failure when the summed value output from the integration circuit is equal to or greater than a threshold, in a case where the second controller controls the plurality of relays so that all of the plurality of relays are in the OFF state when the control signal is input from the first controller to the relay circuit.

### [Item 11]

The unmanned aerial vehicle according to Item 8 or 9, wherein the second controller is configured to:
control ON/OFF operation of each of the plurality of relays; and
determine that one relay of the plurality of relays has an ON failure or an OFF failure when the summed value output from the integration circuit is less than a threshold, in a case where the second controller controls the plurality of relays so that after all of the plurality of relays are turned OFF when the control signal is input from the first controller to the relay circuit, the one relay of the plurality of relays is in the ON state.

### [Item 12]

The unmanned aerial vehicle according to Item 11, wherein the threshold used to determine an ON failure of the one relay of the plurality of relays is larger than the threshold used to determine an OFF failure of the one relay of the plurality of relays.

### [Item 13]

A termination system for terminating operation of a plurality of motor drive circuits, and usable in an unmanned aerial vehicle comprising a plurality of rotors, a plurality of electric motors each configured to rotate a respective one of the plurality of rotors, the plurality of motor drive circuits each configured to drive a respective one of the plurality of electric motors, and a controller configured to control operation of each of the plurality of motor drive circuits, the termination system being configured to output a stop signal to the controller to change the operation of the plurality of motor drive circuits from a flight state of the unmanned aerial vehicle to a state where flight is not possible.

### [Item 14]

The termination system according to Item 13, comprising an operation terminal to output the stop signal to the controller when the unmanned aerial vehicle is positioned above a field.

### [Item 15]

The termination system according to Item 13 or 14, comprising a relay circuit electrically connected between the plurality of motor drive circuits and the controller, wherein the relay circuit is configured to interrupt a control signal transmitted from the controller to control rotation speed of the rotors in response to the stop signal to stop the operation of the plurality of motor drive circuits.

### [Item 16]

The termination system according to Item 15, comprising a diagnostic device configured to execute fault diagnosis of the relay circuit based on an output from the relay circuit.

### INDUSTRIAL APPLICABILITY

The unmanned aerial vehicle according to the present disclosure may be widely utilized not only for aerial photography, surveying, logistics, and agricultural spraying applications but also for ground work related to agriculture, transportation of harvested crops and agricultural materials.

### REFERENCE SIGNS LIST

**2...** rotor (propeller), **3...** rotation drive device, **4...** main body, **4a...** control device, **4b...** sensors, **4c...** communication device, **5...** body frame, **6...** ground station, **7a...** internal combustion engine, **7b...** fuel tank, **8...** electric generator, **9...** power buffer, **10...** multicopter, **12...** rotor, **14...** motor, **16...** ESC, **70...** first controller, **76...** power supply, **80...** relay circuit, **81, 81a-81d...** relay, **82...** diagnostic device, **83, 83a-83d...** averaging circuit, **84...** integration circuit, **85...** AD converter circuit, **86...** second controller, **87, 87a-87c...** adder, **90...** warning device, **200...** work machine

## Claims

1. An unmanned aerial vehicle comprising a plurality of rotors, the unmanned aerial vehicle comprising:
a plurality of electric motors, each configured to rotate a respective one of the plurality of rotors;
a plurality of motor drive circuits, each configured to drive a respective one of the plurality of electric motors; and
a controller configured to control operation of the plurality of motor drive circuits,
wherein the controller is configured to change the operation of the plurality of motor drive circuits from a flight state of the unmanned aerial vehicle to a state where flight is not possible in response to a stop signal.

2. The unmanned aerial vehicle according to Claim 1, further comprising a relay circuit electrically connected between the plurality of motor drive circuits and the controller; wherein
the relay circuit is configured to interrupt a control signal transmitted from the controller to control rotation speed of the rotors in response to the stop signal to stop the operation of the plurality of motor drive circuits.

3. The unmanned aerial vehicle according to Claim 2, further comprising a diagnostic device configured to execute fault diagnosis of the relay circuit based on an output from the relay circuit.

4. The unmanned aerial vehicle according to Claim 3, wherein the diagnostic device executes fault diagnosis of the relay circuit before takeoff of the unmanned aerial vehicle.

5. The unmanned aerial vehicle according to Claim 4, wherein the relay circuit includes a plurality of relays, each of which is configured to interrupt the control signal in response to the stop signal.

6. The unmanned aerial vehicle according to Claim 5, wherein the diagnostic device executes diagnosis of ON/OFF failures of the plurality of relays.

7. The unmanned aerial vehicle according to Claim 6, further comprising a warning device configured to issue a warning about an ON/OFF failure of at least one of the plurality of relays; wherein
the diagnostic device is configured to:
execute the diagnosis of ON/OFF failures of the plurality of relays when the unmanned aerial vehicle is powered on; and
cause the warning device to issue the warning when an ON/OFF failure of at least one of the plurality of relays is detected.

8. The unmanned aerial vehicle according to Claim 6 or 7, wherein:
the controller is a first controller; and
the diagnostic device includes:
a plurality of averaging circuits, each connected to a motor drive circuit side of a respective one of the plurality of relays;
an integration circuit configured to output a summed value by summing output values from each of the plurality of averaging circuits; and
a second controller configured to detect an ON/OFF failure of at least one of the plurality of relays based on the summed value output from the integration circuit.

9. The unmanned aerial vehicle according to Claim 8, wherein:
the control signal is a PWM signal; and
each of the plurality of averaging circuits outputs an analog voltage corresponding to a duty ratio of the PWM signal.

10. The unmanned aerial vehicle according to Claim 8 or 9, wherein the second controller is configured to:
control ON/OFF operation of each of the plurality of relays; and
determine that at least one of the plurality of relays has an ON failure when the summed value output from the integration circuit is equal to or greater than a threshold, in a case where the second controller controls the plurality of relays so that all of the plurality of relays are in the OFF state when the control signal is input from the first controller to the relay circuit.

11. The unmanned aerial vehicle according to Claim 8 or 9, wherein the second controller is configured to:
control ON/OFF operation of each of the plurality of relays; and
determine that one relay of the plurality of relays has an ON failure or an OFF failure when the summed value output from the integration circuit is less than a threshold, in a case where the second controller controls the plurality of relays so that after all of the plurality of relays are turned OFF when the control signal is input from the first controller to the relay circuit, the one relay of the plurality of relays is in the ON state.

12. The unmanned aerial vehicle according to Claim 11, wherein the threshold used to determine an ON failure of the one relay of the plurality of relays is larger than the threshold used to determine an OFF failure of the one relay of the plurality of relays.

13. A termination system for terminating operation of a plurality of motor drive circuits, and usable in an unmanned aerial vehicle comprising a plurality of rotors, a plurality of electric motors each configured to rotate a respective one of the plurality of rotors, the plurality of motor drive circuits each configured to drive a respective one of the plurality of electric motors, and a controller configured to control operation of each of the plurality of motor drive circuits, the termination system being configured to output a stop signal to the controller to change the operation of the plurality of motor drive circuits from a flight state of the unmanned aerial vehicle to a state where flight is not possible.

14. The termination system according to Claim 13, comprising an operation terminal to output the stop signal to the controller when the unmanned aerial vehicle is positioned above a field.

15. The termination system according to Claim 13 or 14, comprising a relay circuit electrically connected between the plurality of motor drive circuits and the controller, wherein the relay circuit is configured to interrupt a control signal transmitted from the controller to control rotation speed of the rotors in response to the stop signal to stop the operation of the plurality of motor drive circuits.

16. The termination system according to Claim 15, comprising a diagnostic device configured to execute fault diagnosis of the relay circuit based on an output from the relay circuit.
